# FASCICULE DE BREVET EUROPEEN

(11) **EP 3 667 877 B1**
(45) Date de publication et mention de la délivrance du brevet: **02.02.2022**
(21) Numéro de dépôt: 19215988.7
(22) Date de dépôt: 13.12.2019
(51) Int. Cl.: H02K 15/00, H02K 7/14

(54) **MOTEUR DE VÉHICULE FERROVIAIRE ET PROCÉDÉ D'INSTALLATION DU MOTEUR**
SCHIENENFAHRZEUGMOTOR UND EINBAUVERFAHREN DIESES MOTORS
RAILWAY VEHICLE ENGINE AND METHOD FOR INSTALLING THE ENGINE

(30) Priorité: 14.12.2018 FR 1872966
(43) Date de publication de la demande: 17.06.2020
(73) Titulaire: ALSTOM Transport Technologies, 93400 Saint-Ouen-sur-Seine (FR)
(72) Inventeur: ROBBE, Gilles, 25660 MONTFAUCON (FR); RACLOT, Jean-Philippe, 25000 BESANCON (FR); CHARNOZ, Hervé, 25330 SILLEY (FR); GUIGNIER, Gilles, 90000 BELFORT (FR)
(74) Mandataire: Lavoix

(56) Documents cités:
- CN-B- 105 071 609
- CN-B- 106 411 061
- JP-A- 2000 350 416
- JP-A- 2007 325 426
- JP-A- 2007 325 449

## Description

La présente invention concerne un moteur de véhicule ferroviaire comprenant un arbre moteur et un carter de l'arbre moteur, l'arbre moteur étant mobile en rotation par rapport au carter.

Un tel moteur est par exemple destiné à être monté sur un bogie de véhicule ferroviaire.

Il est connu de l'état de la technique de protéger un tel moteur et plus particulièrement l'arbre moteur des vibrations induites, dues par exemple aux transports du moteur avant et après son montage sur le bogie, entre le site de production du moteur et celui du bogie, et entre le site de production du bogie et le site de montage du véhicule ferroviaire recevant le bogie.

Ces vibrations induites génèrent, par exemple, des mouvements radiaux ou axiaux de l'arbre moteur entrainant une usure prématurée des roulements de l'arbre moteur.

Le document FR-3 049 548 décrit un moteur de véhicule ferroviaire comprenant au moins un patin de contact comprenant une surface en contact avec l'arbre moteur ou avec une pièce liée en rotation à l'arbre moteur, dans lequel le patin s'étend selon une direction sensiblement radiale autour de l'arbre moteur et applique une force radiale sur l'arbre moteur en position de blocage.

Le document JP 2007 325 449 décrit un moteur de véhicule ferroviaire comprenant un dispositif de protection du moteur lors du transport. Le dispositif de protection du moteur est constitué par une plaque fixe placée à une extrémité du moteur transversalement à l'axe de rotation de l'arbre moteur.

Un tel patin de contact empêche les débattements du moteur par rapport au carter. Cependant, il n'empêche pas les micro-déplacements axiaux de l'arbre moteur pendant le transport du moteur. De tels micro-déplacements axiaux sont un contributeur majeur du faux effet Brinell.

Un des buts de l'invention est de proposer un moteur de véhicule ferroviaire permettant d'empêcher les mouvements axiaux de l'arbre moteur, jusqu'à la mise en service.

A cet effet, l'invention a pour objet un moteur de véhicule ferroviaire comprenant un arbre moteur et un carter de l'arbre moteur, l'arbre moteur s'étendant selon une direction longitudinale entre deux extrémités, et étant mobile en rotation autour d'un axe longitudinal par rapport au carter, le carter comprenant deux flancs, perpendiculaires à l'axe longitudinal,
dans lequel le moteur comprend au moins un dispositif de blocage des mouvements axiaux de l'arbre moteur par rapport au carter, ledit dispositif de blocage comprenant une tige de verrouillage de l'arbre moteur, la tige de verrouillage s'étendant selon la direction longitudinale et étant montée selon la direction longitudinale dans une position de blocage, de préférence réversible, dans laquelle la tige de verrouillage est en contact direct avec l'arbre moteur et empêche les mouvements axiaux de l'arbre moteur par rapport au carter.

Grâce à l'invention, il est possible d'obtenir un moteur de véhicule ferroviaire comprenant un dispositif de blocage de l'arbre moteur qui empêche les mouvements axiaux de l'arbre moteur, et permet en outre la rotation du moteur et ainsi la manipulation d'un bogie comprenant le moteur ou d'un véhicule comprenant le moteur dans des installations d'assemblage et des dépôts de stockage.

Le moteur selon l'invention peut comprendre l'une ou plusieurs des caractéristiques suivantes, prise(s) isolément ou suivant toute combinaison techniquement possible :
le dispositif de blocage en position de blocage applique sur l'arbre moteur une force de compression ou une force de traction selon la direction longitudinale ;
au moins un flanc du carter comprend un élément de protection, et la tige de verrouillage passe au travers d'un orifice ménagé dans l'élément de protection ;
le moteur comprend un côté entraînement destiné à être placé du côté d'un équipement à entraîner et un côté opposé à l'entraînement, et le dispositif de blocage est appliqué du côté opposé à l'entraînement ;
le dispositif de blocage comprend un élément de contrainte qui contraint la tige de verrouillage vers sa position de blocage ;
le dispositif de blocage comprend une poutre fixée de façon amovible à un flanc du carter, ladite poutre étant sensiblement parallèle audit flanc, la poutre étant pourvue d'un orifice de passage de la tige de verrouillage ;
l'élément de contrainte s'étend entre la poutre et un élément de serrage (54) de l'élément de contrainte ;
la tige de verrouillage comprend une extrémité proximale proche de l'arbre moteur et une extrémité distale opposée à l'extrémité proximale, l'élément de contrainte s'étendant entre l'extrémité distale et un capuchon, le capuchon étant muni d'éléments de serrage de l'élément de contrainte, et le dispositif de blocage en position de blocage applique sur l'arbre moteur une force de compression selon la direction longitudinale ;
la tige de verrouillage comprend une extrémité proximale proche de l'arbre moteur et une extrémité distale opposée à l'extrémité proximale, la tige de verrouillage comprenant un élément de serrage de l' élément de contrainte, l'élément de contrainte s'étendant autour de l'extrémité distale de la tige de verrouillage, l'arbre moteur étant pourvu d'un orifice longitudinal débouchant dans l'une des deux extrémités, de l'arbre moteur et recevant l'extrémité proximale de la tige de verrouillage, le dispositif de blocage en position de blocage appliquant sur l'arbre moteur une force de traction selon la direction longitudinale.

L'invention a également pour objet un procédé d'installation d'un moteur tel que décrit ci-dessus, sur un bogie de véhicule ferroviaire comprenant les étapes suivantes :
montage du moteur dans le bogie, la tige de verrouillage étant en position de blocage de l'arbre moteur,
accouplement de l'arbre moteur avec un dispositif d'entraînement du bogie,
retrait de la tige de verrouillage selon la direction longitudinale, avant ou après accouplement.

L'invention sera mieux comprise à la lecture de la description qui va suivre, donnée uniquement à titre d'exemple et faite en se référant aux dessins annexés sur lesquels :
[Fig. 1] la figure 1 est une vue en perspective, de trois quarts, d'une partie d'un moteur de véhicule ferroviaire selon un premier mode de réalisation de l'invention ;
[Fig. 2] la figure 2 est une vue en perspective et en coupe dans un plan longitudinal du moteur de la Figure 1 ;
[Fig. 3] la figure 3 est une coupe d'une partie du moteur de la figure 2 dans un plan longitudinal de l'arbre moteur ;
[Fig. 4] la figure 4 est une vue en perspective et en coupe dans un plan longitudinal du moteur selon un second mode de réalisation de l'invention ; et
[Fig. 5] la figure 5 est une coupe d'une partie du moteur de la figure 4 dans un plan longitudinal de l'arbre moteur.

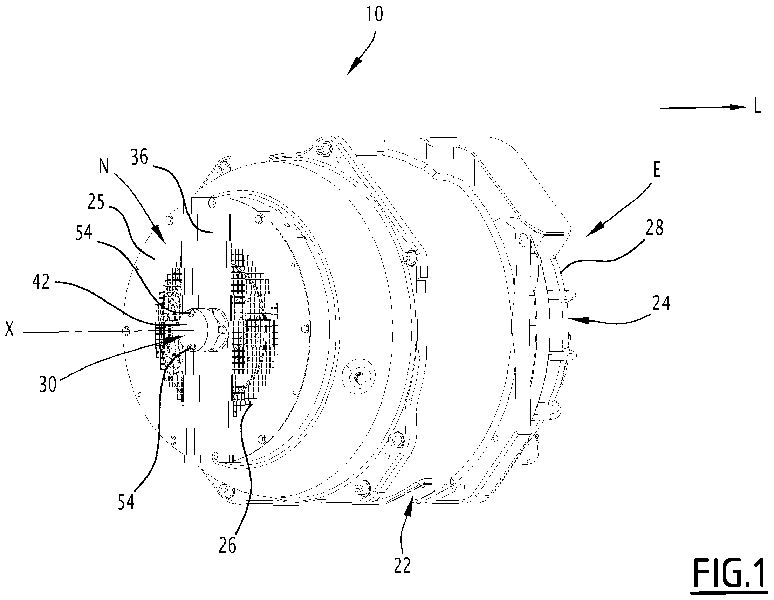

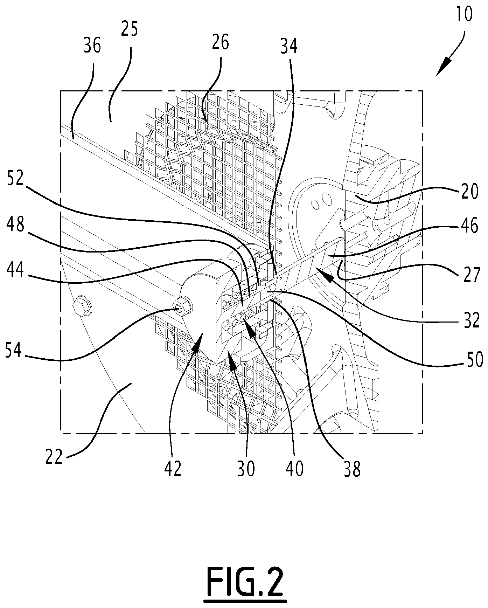

En référence aux figures 1 et 2, on décrit un moteur 10 comprenant un arbre moteur 20 et un carter 22 de l'arbre moteur 20, formant un boîtier de protection de l'arbre moteur 20.

Dans tout ce qui suit, le terme « longitudinal » est défini par rapport à la direction selon laquelle l'arbre moteur 20 s'étend.

Dans la direction longitudinale L, le moteur 10 comprend un côté entraînement E destiné à être placé du côté d'un équipement à entraîner et un côté opposé à l'entraînement N.

De préférence, le moteur 10 comprend un système de refroidissement à air.

Le carter 22 comprend deux flancs ou flasques 24, 25 sensiblement perpendiculaires à la direction longitudinale L. L'un des flancs 24 du carter 22 est situé du côté entraînement E et l'autre des flancs 25 est situé du côté opposé à l'entraînement N.

Par exemple, au moins un flanc 25 du carter 22 comprend un élément de protection 26. Dans l'exemple représenté, l'élément de protection 26 est une grille. L'élément de protection 26 permet d'empêcher l'introduction de corps étrangers dans le système de refroidissement à air du moteur 10.

L'arbre moteur 20 s'étend entre deux extrémités 27, 28 et est mobile en rotation autour d'un axe longitudinal X par rapport au carter 22.

Le moteur 10 comprend au moins un dispositif de blocage 30 des mouvements axiaux de l'arbre moteur 20 par rapport au carter 22.

De préférence, le dispositif de blocage 30 est appliqué du côté opposé à l'entraînement N.

Cela permet de maintenir le dispositif de blocage 30 en place avec le moteur 10 lorsque celui-ci est monté sur un bogie et que son côté entraînement est relié à une partie à entraîner du bogie. En outre, le dispositif de blocage 30 reste ainsi accessible pour un opérateur lorsque le moteur est monté sur le bogie.

Le dispositif de blocage 30 en position de blocage applique sur l'arbre moteur 10 une force de compression ou une force de traction selon la direction longitudinale L.

Comme représenté sur la figure 2, le dispositif de blocage 30 comprend une tige de verrouillage 32 de l'arbre moteur 20. La tige de verrouillage 32 s'étend selon la direction longitudinale L et est montée selon la direction longitudinale L dans une position de blocage réversible dans laquelle la tige de verrouillage 32 est en contact direct avec l'arbre moteur 20 et empêche les mouvements axiaux de l'arbre moteur 20 par rapport au carter 22.

La tige de verrouillage 32 passe par exemple au travers d'un orifice 34 ménagé dans le flanc 25 s'étendant du côté opposé à l'entraînement N, par exemple au travers de l'élément de protection 26 le cas échéant.

Le dispositif de blocage 30 comprend par exemple une poutre 36 fixée de façon amovible à un flanc 25 du carter 22. La poutre 36 est par exemple boulonnée au flanc 25 du carter 22. La poutre 36 est sensiblement parallèle au flanc 25. La poutre 36 est pourvue d'un orifice 38 de passage de la tige de verrouillage 32. La poutre 36 permet le maintien en place du dispositif de blocage 30.

Le dispositif de blocage 30 comprend par exemple un élément de contrainte 40 qui contraint la tige de verrouillage 32 vers sa position de blocage. L'élément de contrainte 40 est tout système utilisant l'élasticité d'un solide ou d'un fluide, par exemple, permettant d'exercer une force de répulsion longitudinale. L'élément de contrainte 40 est, par exemple, un ressort. En variante, l'élément de contrainte 40 est un empilage de rondelles élastiques, une lame de ressort, une pièce en élastomère, ou un système à aimants permanents. Dans le premier mode de réalisation représenté sur les figures 1 à 3, le dispositif de blocage 30 comprend un capuchon 42. Le capuchon 42 recouvre l'élément de contrainte 40 et comprend une tige 44 formée dans le capuchon 42 et s'étendant suivant la direction longitudinale L.

La tige de verrouillage 32 comprend une extrémité proximale 46 proche de l'arbre moteur 20 et une extrémité distale 48 opposée à l'extrémité proximale 46.

L'extrémité distale 48 est pourvue d'un orifice longitudinal 50 de réception complémentaire de la tige 44 formée dans le capuchon 42. L'extrémité distale 48 présente un rebord 52 ménagé à la périphérie de l'orifice longitudinal de réception 50.

L'élément de contrainte 40 s'étend longitudinalement autour de la tige 44. L'élément de contrainte 40 prend appui d'une part sur le rebord 52 de la tige de verrouillage 32 et d'autre part sur le capuchon 42.

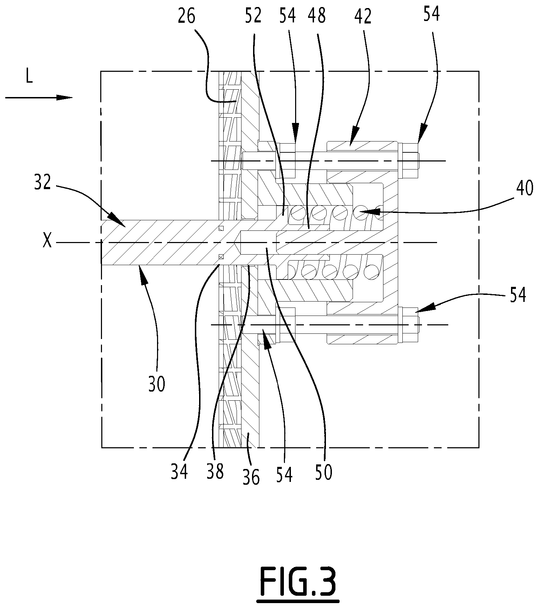

Comme représenté sur la figure 3, le capuchon 42 est, en outre, muni d'éléments de serrage 54 de l'élément de contrainte 40. Les éléments de serrage 54 sont par exemple des vis fixées d'une part au capuchon 42 et d'autre part à la poutre 36. Le serrage des éléments de serrage 54 est, de préférence, ajustable. Cela permet de varier la force de serrage en fonction de la masse de l'arbre moteur 20 et des accélérations horizontales supposées lors du transport du moteur 10.

Pour passer en position de blocage, les éléments de serrage 54 sont serrés en appliquant la force désirée, le capuchon 42 comprime l'élément de contrainte 40, la tige 44 se déplace longitudinalement à l'intérieur de l'orifice longitudinal de réception 50 de la tige de verrouillage 32, qui elle-même vient s'appuyer contre l'arbre moteur 20 et entraîner l'arbre moteur 20 vers le côté entrainement E du moteur 10 et le bloque dans la direction longitudinale L.

Ainsi, le dispositif de blocage 30 applique sur l'arbre moteur 20 une force de compression selon la direction longitudinale L et centrée sur l'axe longitudinal X, et empêche les micro-déplacements axiaux de l'arbre moteur 20 dans le carter 22.

De préférence, le dispositif de blocage 30 en position de blocage autorise la rotation de l'arbre moteur 20 autour de son axe X.

Pour démonter le dispositif de blocage 30, les éléments de serrage 54 sont desserrés, le capuchon 42 relâche l'élément de contrainte 40, la tige 44 se déplace longitudinalement vers l'extérieur de la tige de verrouillage 32, qui elle-même se déplace longitudinalement vers l'extérieur de l'arbre moteur 20. Puis la poutre 36 est retirée.

Les mouvements axiaux de l'arbre moteur 20 ne sont plus empêchés.

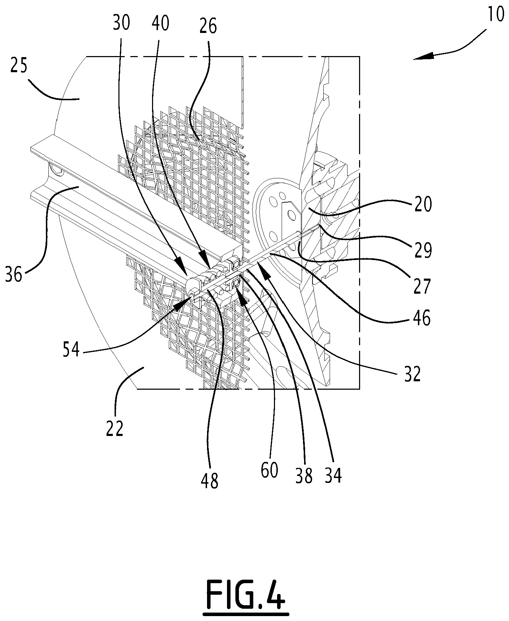

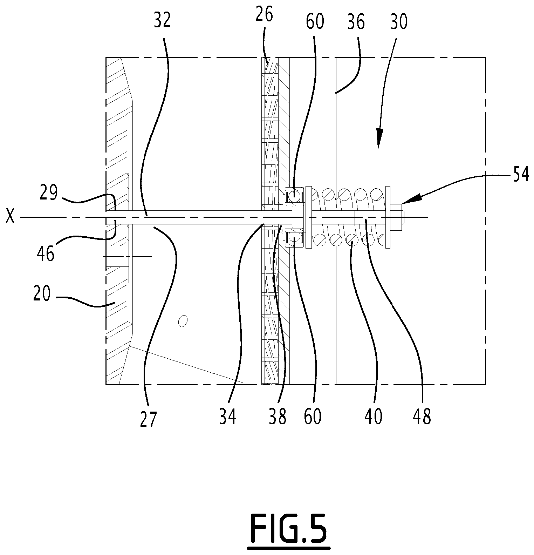

Un deuxième mode de réalisation de moteur selon l'invention va maintenant être décrit en référence aux figures 4 et 5. Seuls les éléments différant du premier mode de réalisation seront décrits, les autres éléments étant identiques au premier mode de réalisation. Des éléments identiques aux deux modes de réalisation présentent une même numérotation.

Dans ce mode de réalisation, l'arbre moteur 20 est pourvu d'un orifice longitudinal 29 débouchant dans l'extrémité 27 de l'arbre moteur 20 située du côté opposé à l'entraînement N du moteur 10 comme cela est visible sur la figure 4. L'orifice longitudinal 29 est par exemple centré sur l'axe longitudinal X de rotation de l'arbre moteur 20. Selon l'exemple représenté, l'orifice longitudinal 29 est un orifice borgne. En variante, l'orifice longitudinal 29 est un orifice traversant.

L'orifice longitudinal 29 de l'arbre moteur 20 est taraudé.

L'extrémité proximale 46 de la tige de verrouillage 32 est filetée. L'extrémité proximale 46 est boulonnée dans l'orifice longitudinal 29 de l'arbre moteur 20. La tige de verrouillage 32 passe par exemple au travers de l'orifice 34 aménagé dans l'élément de protection 26 de l'arbre moteur 20.

L'élément de contrainte 40 est un ressort qui s'étend autour de l'extrémité distale 48 de la tige de verrouillage 32.

L'extrémité distale 48 de la tige de verrouillage 32 comprend un élément de serrage 54 de l'élément de contrainte 40. L'élément de serrage 54 est, par exemple, un écrou.

Le serrage de l'élément de serrage 54 est, de préférence, ajustable. Cela permet de varier la force de serrage en fonction de la masse de l'arbre moteur 20 et des accélérations horizontales supposées lors du transport du moteur 10.

L'ensemble formé par la tige de verrouillage 32 et l'élément de contrainte 40 repose sur un roulement à billes 60 comme représenté sur la figure 5 permettant une rotation à faible vitesse de la tige de verrouillage 32 et l'élément de contrainte 40 avec l'arbre moteur 20. En variante, l'élément de contrainte 40 repose sur une butée à billes.

Pour passer en position de blocage, l'élément de serrage 54 est serré en appliquant la force désirée, l'élément de contrainte 40 est comprimé, la tige de verrouillage 32 vissée dans l'orifice longitudinal 29 de l'arbre moteur 20 entraîne l'arbre moteur 20 vers le côté opposé à l'entrainement N du moteur 10 et le bloque dans la direction longitudinale L.

Ainsi, le dispositif de blocage 30 en position de blocage applique sur l'arbre moteur 20 une force de traction selon la direction longitudinale L et centrée sur l'axe longitudinal X, et empêche les micro-déplacements axiaux de l'arbre moteur 20 dans le carter 22. De préférence, le dispositif de blocage 30 en position de blocage autorise la rotation de l'arbre moteur 20 autour de son axe X.

Pour démonter le dispositif de blocage 30, l'élément de serrage 54 est desserré, l'élément de contrainte 40 est relâché, la tige de verrouillage 32 se déplace longitudinalement vers l'extérieur de l'arbre moteur 20. Puis la poutre 36 est retirée. Les mouvements axiaux de l'arbre moteur 20 ne sont plus empêchés.

Le dispositif de blocage 30 selon l'invention est conçu pour pouvoir être installé et retiré sur le moteur 10 lorsqu'il est monté sur un bogie.

Le procédé d'installation d'un moteur 10 selon l'invention sur un bogie de véhicule ferroviaire comprend les étapes suivantes :
le montage du moteur 10 dans le bogie, la tige de verrouillage 32 est alors en position de blocage de l'arbre moteur 20 empêchant les mouvements axiaux de l'arbre moteur 20 par rapport au carter 22,
l'accouplement de l'arbre moteur 20 avec un dispositif d'entrainement du bogie est alors réalisé.
le retrait de la tige de verrouillage 32, avant ou après l'accouplement.

De préférence, le procédé comprend également une étape de retrait de la poutre 36.

Ainsi, le dispositif de blocage 30 du moteur 10 selon l'invention empêche efficacement le déplacement axial de l'arbre moteur 20 avec une précharge qui peut être adaptée à la masse de l'arbre moteur 20 et aux conditions de transport prévues.

Le dispositif de blocage 30 peut être utilisé pour le transport du moteur 10 seul, le transport du moteur monté sur un bogie, et le transport du moteur 10 sous un véhicule.

Le dispositif de blocage 30 permet en outre la rotation du moteur 10 et ainsi la manipulation d'un bogie comprenant le moteur 10 ou d'un véhicule comprenant le moteur 10 dans des installations d'assemblage et des dépôts de stockage.

Le dispositif de blocage 30 peut également être démonté lors du fonctionnement du véhicule sur lequel il est monté, puis réinstallé pour un stockage à long terme du moteur 10, du bogie ou du véhicule comprenant le moteur 10, ou en cas de transport du moteur 10 ou du bogie comprenant le moteur 10 pour un entretien si nécessaire.

## Revendications

1. Moteur (10) de véhicule ferroviaire comprenant un arbre moteur (20) et un carter (22) de l'arbre moteur (20), l'arbre moteur (20) s'étendant selon une direction longitudinale (L) entre deux extrémités (26, 28) et étant mobile en rotation autour d'un axe longitudinal (X) par rapport au carter (22), le carter (22) comprenant deux flancs (24, 25) perpendiculaires à l'axe longitudinal (X),
le moteur (10) comprend au moins un dispositif de blocage (30) des mouvements axiaux de l'arbre moteur (20) par rapport au carter (22), ledit dispositif de blocage (30) comprenant une tige de verrouillage (32) de l'arbre moteur (20), la tige de verrouillage (32) s'étendant selon la direction longitudinale (L) et étant montée selon la direction longitudinale (L) dans une position de blocage, de préférence réversible, dans laquelle la tige de verrouillage (L) est en contact direct avec l'arbre moteur (20) et empêche les mouvements axiaux de l'arbre moteur (20) par rapport au carter (22), **caractérisé en ce que**
le dispositif de blocage (30) comprend également un élément de contrainte (40) qui contraint la tige de verrouillage (32) vers sa position de blocage, et **en ce que** le dispositif de blocage (30) comprend une poutre (36) fixée de façon amovible à un flanc (25) du carter, ladite poutre (36) étant sensiblement parallèle audit flanc (25), la poutre (36) étant pourvue d'un orifice de passage (38) de la tige de verrouillage (32)
et dans lequel le dispositif de blocage (30) en position de blocage applique sur l'arbre moteur (20) une force de compression ou une force de traction selon la direction longitudinale (L), l'élément de contrainte (40) étant un ressort s'étendant entre la poutre (36) et un élément de serrage (54) de l'élément de contrainte (40).

2. Moteur (10) selon la revendication 1, dans lequel au moins un flanc (25) du carter (22) comprend un élément de protection (26), et dans lequel la tige de verrouillage (32) passe au travers d'un orifice (34) ménagé dans l'élément de protection (26).

3. Moteur (10) selon la revendication 1 ou 2, dans lequel le moteur (10) comprend un côté entraînement (E) destiné à être placé du côté d'un équipement à entraîner et un côté opposé à l'entraînement (N), et dans lequel le dispositif de blocage (30) est appliqué du côté opposé à l'entraînement (N).

4. Moteur (10) selon l'une quelconque des revendications 1 à 3, dans lequel la tige de verrouillage (32) comprend une extrémité proximale (46) proche de l'arbre moteur (20) et une extrémité distale (48) opposée à l'extrémité proximale (46), l'élément de contrainte (40) s'étendant entre l'extrémité distale (48) et un capuchon (42), le capuchon (42) étant muni d'éléments de serrage (54) de l'élément de contrainte (40), et dans lequel le dispositif de blocage (30) en position de blocage applique sur l'arbre moteur (20) une force de compression selon la direction longitudinale (L).

5. Moteur (10) selon l'une quelconque des revendications 1 à 3, dans lequel la tige de verrouillage (32) comprend une extrémité proximale (46) proche de l'arbre moteur (20) et une extrémité distale (48) opposée à l'extrémité proximale (46), la tige de verrouillage (32) comprenant un élément de serrage (54) de l' élément de contrainte (40), l'élément de contrainte (40) s'étendant autour de l'extrémité distale (48) de la tige de verrouillage (32), l'arbre moteur (20) étant pourvu d'un orifice longitudinal (29) débouchant dans l'une des deux extrémités (26, 28) de l'arbre moteur (20) et recevant l'extrémité proximale (46) de la tige de verrouillage (32), dans lequel le dispositif de blocage (30) en position de blocage applique sur l'arbre moteur (20) une force de traction selon la direction longitudinale (L).

6. Procédé d'installation d'un moteur (10) selon l'une quelconque des revendications 1 à 5, sur un bogie de véhicule ferroviaire comprenant les étapes suivantes :
montage du moteur (10) dans le bogie, la tige de verrouillage (32) étant en position de blocage de l'arbre moteur (20),
accouplement de l'arbre moteur (20) avec un dispositif d'entraînement du bogie (10),
retrait de la tige de verrouillage (32) selon la direction longitudinale (L), avant ou après accouplement.

## Patentansprüche

1. Motor (10) eines Schienenfahrzeugs, umfassend eine Motorwelle (20) und ein Gehäuse (22) der Motorwelle (20), wobei sich die Motorwelle (20) gemäß einer Längsrichtung (L) zwischen zwei Enden (26, 28) erstreckt und um eine Längsachse (X) in Bezug auf das Gehäuse (22) rotatorisch beweglich ist, wobei das Gehäuse (22) zwei Flanken (24, 25) umfasst, die senkrecht zur Längsachse (X) sind,
wobei der Motor (10) mindestens eine Blockiervorrichtung (30) der axialen Bewegungen der Motorwelle (20) in Bezug auf das Gehäuse (22) umfasst, wobei die Blockiervorrichtung (30) eine Verriegelungsstange (32) der Motorwelle (20) umfasst, wobei sich die Verriegelungsstange (32) gemäß der Längsrichtung (L) erstreckt und gemäß der Längsrichtung (L) in einer vorzugsweise reversiblen Blockierposition angebracht ist, in welcher die Verriegelungsstange (L) in direktem Kontakt mit der Motorwelle (20) ist und die axialen Bewegungen der Motorwelle (20) in Bezug auf das Gehäuse (22) verhindert, **dadurch gekennzeichnet, dass** die Blockiervorrichtung (30) ebenfalls ein Zwangselement (40) umfasst, das die Verriegelungsstange (32) in Richtung ihrer Blockierposition zwingt,
und dass die Blockiervorrichtung (30) einen Balken (36) umfasst, der lösbar an einer Flanke (25) des Gehäuses befestigt ist, wobei der Balken (36) etwa parallel zu der Flanke (25) ist, wobei der Balken (36) mit einer Durchgangsöffnung (38) für die Verriegelungsstange (32) versehen ist,
und wobei die Blockiervorrichtung (30) in Blockierposition eine Kompressionskraft oder eine Zugkraft gemäß der Längsrichtung (L) auf die Motorwelle (20) ausübt, wobei das Zwangselement (40) eine Feder ist, die sich zwischen dem Balken (36) und einem Spannelement (54) des Zwangselements (40) erstreckt.

2. Motor (10) nach Anspruch 1, wobei mindestens eine Flanke (25) des Gehäuses (22) ein Schutzelement (26) umfasst, und wobei die Verriegelungsstange (32) durch eine Öffnung (34) verläuft, die im Schutzelement (26) eingerichtet ist.

3. Motor (10) nach Anspruch 1 oder 2, wobei der Motor (10) eine Antriebsseite (E) umfasst, die bestimmt ist, auf der Seite einer anzutreibenden Ausrüstung platziert zu sein, und eine dem Antrieb entgegengesetzte Seite (N), und wobei die Blockiervorrichtung (30) auf der dem Antrieb entgegengesetzten Seite (N) angewendet wird.

4. Motor (10) nach einem der Ansprüche 1 bis 3, wobei die Verriegelungsstange (32) ein proximales Ende (46) in der Nähe der Motorwelle (20) und ein distales Ende (48) gegenüber dem proximalen Ende (46) umfasst, wobei sich das Zwangselement (40) zwischen dem distalen Ende (48) und einer Kappe (42) erstreckt, wobei die Kappe (42) mit Spannelementen (54) des Zwangselements (40) versehen ist und wobei die Blockiervorrichtung (30) in Blockierposition auf die Motorwelle (20) eine Kompressionskraft gemäß der Längsrichtung (L) ausübt.

5. Motor (10) nach einem der Ansprüche 1 bis 3, wobei die Verriegelungsstange (32) ein proximales Ende (46) in der Nähe der Motorwelle (20) und ein distales Ende (48) gegenüber dem proximalen Ende (46) umfasst, wobei die Verriegelungsstange (32) ein Spannelement (54) des Zwangselements (40) umfasst, wobei sich das Zwangselement (40) um das distale Ende (48) der Verriegelungsstange (32) erstreckt, wobei die Motorwelle (20) mit einer Längsöffnung (29) versehen ist, die in einem der zwei Enden (26, 28) der Motorwelle (20) ausmündet und das proximale Ende (46) der Verriegelungsstange (32) aufnimmt, wobei die Blockiervorrichtung (30) in Blockierposition auf die Motorwelle (20) eine Zugkraft gemäß der Längsrichtung (L) ausübt.

6. Verfahren zum Einbau eines Motors (10) nach einem der Ansprüche 1 bis 5 in ein Drehgestell eines Schienenfahrzeugs, das die folgenden Schritte umfasst:
Montage des Motors (10) in das Drehgestell, wobei die Verriegelungsstange (32) in Blockierposition der Motorwelle (20) ist,
Kopplung der Motorwelle (20) mit einer Antriebsvorrichtung des Drehgestells (10),
Entfernen der Verriegelungsstange (32) gemäß der Längsrichtung (L) vor oder nach dem Koppeln.

## Claims

1. A railway vehicle engine (10) comprising a drive shaft (20) and a casing (22) of the drive shaft (20), the drive shaft (20) extending along a longitudinal direction (L) between two ends (26, 28) and being rotatable about a longitudinal axis (X) relative to the casing (22), the casing (22) comprising two sides (24, 25) that are perpendicular to the longitudinal axis (X),
the engine (10) comprises at least one blocking device (30) for blocking the axial movements of the drive shaft (20) relative to the casing (22), said blocking device (30) comprising a locking rod (32) of the drive shaft (20), the locking rod (32) extending in the longitudinal direction (L) and being mounted along the longitudinal direction (L) in a blocking position, preferably reversible, in which the locking rod (L) is in direct contact with the drive shaft (20) and prevents the axial movements of the drive shaft (20) relative to the casing (22), **characterized in that** the blocking device (30) also comprises a stress element (40) that stresses the locking rod (32) toward its blocking position,
and **in that** the blocking device (30) comprises a beam (36) removably attached to one side (25) of the casing, said beam (36) being substantially parallel to said side (25), the beam (36) being provided with a passage opening (38) for the locking rod (32),
and wherein the blocking device (30) in the blocking position applies, on the drive shaft (20), a compression force or a traction force along the longitudinal direction (L), the stress element (40) being a spring extending between the beam (36) and a clamping element (54) of the stress element (40).

2. The engine (10) according to claim 1, wherein at least one side (25) of the casing (22) comprises a protection element (26), and wherein the locking rod (32) passes through an opening (34) arranged in the protection element (26).

3. The engine (10) according to claim 1 or 2, wherein the engine (10) comprises a driving side (E) intended to be placed on the side of an equipment item to be driven and a side opposite the driving (N), and wherein the blocking device (30) is applied to the side opposite the driving (N).

4. The engine (10) according to any one of claims 1 to 3, wherein the locking rod (32) comprises a proximal end (46) close to the drive shaft (20) and a distal end (48) opposite the proximal end (46), the stress element (40) extending between the distal end (48) and a cap (42), the cap (42) being provided with clamping elements (54) of the stress element (40), and wherein the blocking device (30) in the blocking position applies a compression force on the drive shaft (20) along the longitudinal direction (L).

5. The engine (10) according to any one of claims 1 to 3, wherein the locking rod (32) comprises a proximal end (46) close to the drive shaft (20) and a distal end (48) opposite the proximal end (46), the locking rod (32) comprising a clamping element (54) of the stress element (40), the stress element (40) extending around the distal end (48) of the locking rod (32), the drive shaft (20) being provided with a longitudinal opening (29) that opens into one of the two ends (26, 28) of the drive shaft (20) and that receives the proximal end (46) of the locking rod (32), wherein the blocking device (30) in the blocking position applies a traction force on the drive shaft (20) along the longitudinal direction (L).

6. A method for installing an engine (10) according to any one of claims 1 to 5 on a railway vehicle bogie, comprising the following steps:
mounting the engine (10) in the bogie, the locking rod (32) being in the blocking position of the drive shaft (20),
coupling the drive shaft (20) with a device for driving the bogie (10),
removing the locking rod (32) along the longitudinal direction (L), before or after coupling.
